# DEMANDE DE BREVET EUROPEEN

(11) **EP 4 468 097 A1**
(43) Date de publication de la demande: **27.11.2024**
(21) Numéro de dépôt: 24176953.8
(22) Date de dépôt: 21.05.2024
(51) Int. Cl.: G05B 19/4065

(54) **PROCEDE D ESTIMATION DE BESOIN DE REMPLACEMENT D'UN OUTIL DE COUPE**

(30) Priorité: 22.05.2023 FR 2305027
(71) Demandeur: Airbus, 31700 Blagnac (FR); Airbus Operations (S.A.S.), 31060 Toulouse Cedex 9 (FR)
(72) Inventeur: LE GALL, Caroline, 31700 Blagnac (FR); GRAVOUIL, Wilfried, 17300 Rochefort (FR); THIBAUD, David, 17300 Rochefort (FR)
(74) Mandataire: Cabinet Le Guen Maillet

(57) **Abrégé**

Un procédé d'estimation de besoin de remplacement d'un outil de coupe comporte les étapes suivantes : collecter (102) des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe ; comparer (104) les données collectées, ou des données qui en sont dérivées, avec une courbe de référence représentative d'une usure nominale de l'outil de coupe au fil des opérations d'utilisation de l'outil de coupe ; vérifier (108) si les données collectées, ou les données qui en sont dérivées, entraînent un dépassement, ou pas, d'une tolérance prédéfinie par rapport à la courbe de référence ; et en cas de tel dépassement, déduire (110) un moment approprié pour effectuer un remplacement de l'outil de coupe, en fonction dudit dépassement. Ainsi, il est possible d'optimiser la durée d'utilisation de l'outil de coupe.

## Description

### DOMAINE TECHNIQUE

La présente invention concerne la surveillance d'un outil de coupe en vue de déterminer un moment approprié pour effectuer un remplacement de l'outil de coupe.

### ETAT DE LA TECHNIQUE ANTERIEURE

La génération de chaleur, la pression, le frottement et la répartition des contraintes sont des facteurs importants d'usure d'un outil de coupe.

De nombreuses opérations sont réalisées avec des outils de coupe (forets de perçage...) lors de la construction d'un aéronef. La gestion du replacement de ces outils de coupe est alors un enjeu de grande importance dans ce contexte.

La durée de vie théorique de l'outil de coupe est typiquement définie lors de phases de qualification qui tiennent compte d'une utilisation nominale de l'outil de coupe. La durée de vie théorique de l'outil de coupe est ainsi uniquement indicative, et la durée de vie réelle peut être plus courte ou plus longue que la durée de vie théorique selon les opérations réellement réalisées avec cet outil de coupe (par exemple, selon la profondeur réelle de perçage de trous réalisés avec une perceuse électrique).

Il est alors difficile d'estimer à quel moment approprié effectuer un remplacement de l'outil de coupe, de sorte à notamment éviter d'endommager une pièce sur laquelle l'outil de coupe en question est utilisé ou bien de sorte à prolonger la durée d'utilisation de l'outil de coupe quand son usure réelle le permet. Il est donc souhaitable de fournir une solution qui permette de pallier cet inconvénient de l'état de la technique antérieure.

### EXPOSE DE L'INVENTION

Il est ainsi proposé ici un procédé d'estimation de besoin de remplacement d'un outil de coupe, le procédé étant implémenté par un système sous forme de circuiterie électronique, le procédé comportant les étapes suivantes : collecter des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe ; comparer les données collectées, ou des données qui en sont dérivées, avec une courbe ou des valeurs discrètes de référence représentatives d'une usure nominale de l'outil de coupe au fil des opérations d'utilisation de l'outil de coupe ; vérifier si les données collectées, ou les données qui en sont dérivées, entraînent un dépassement, ou pas, d'une tolérance prédéfinie par rapport à la courbe ou respectivement aux valeurs discrètes de référence ; et en cas de dit dépassement, déduire un moment approprié pour effectuer un remplacement de l'outil de coupe, en fonction dudit dépassement.

Ainsi, il est possible d'estimer à quel moment approprié effectuer un remplacement de l'outil de coupe, de sorte à notamment éviter d'endommager une pièce sur laquelle l'outil de coupe en question est utilisé ou bien de sorte à prolonger la durée d'utilisation de l'outil de coupe quand son usure réelle le permet.

Dans un mode de réalisation particulier, ladite au moins une mesure d'effort pendant ladite opération d'utilisation de l'outil de coupe inclut une mesure de couple.

Dans un mode de réalisation particulier, ladite au moins une mesure d'effort pendant ladite opération d'utilisation de l'outil de coupe inclut une fonction de mesures de couple au fil de ladite opération d'utilisation de l'outil de coupe.

Dans un mode de réalisation particulier, le procédé comprend les étapes suivantes : effectuer une analyse en composantes principales de ladite fonction au fil des opérations d'utilisation de l'outil de coupe ; obtenir la distribution de valeurs de la deuxième composante principale, et appliquer une détection statistique de comportements atypiques en considérant une tolérance d'écart-type par rapport à la moyenne de la distribution.

Dans un mode de réalisation particulier, le procédé comprend les étapes suivantes : effectuer une analyse en composantes principales de ladite fonction au fil des opérations d'utilisation de l'outil de coupe ; comparer la deuxième composante principale à la courbe ou respectivement aux valeurs discrètes de référence.

Dans un mode de réalisation particulier, le procédé comprend l'étape suivante : surveiller le dépassement, ou pas, de la tolérance prédéfinie par rapport à la courbe ou respectivement aux valeurs discrètes de référence en temps réel, à savoir au fur et à mesure des opérations d'utilisation de l'outil de coupe, et générer une alerte d'arrêt d'utilisation de l'outil de coupe lorsque ledit dépassement est constaté après une opération d'utilisation de l'outil de coupe.

Dans un mode de réalisation particulier, le procédé comprend les étapes suivantes : injecter les données collectées dans un réseau neuronal convolutif de type ROCKET connecté en sortie à un modèle de régression de crête ; et comparer la sortie du modèle de régression de crête à la courbe ou respectivement aux valeurs discrètes de référence.

Dans un mode de réalisation particulier, le procédé comprend l'étape suivante : surveiller le dépassement, ou pas, de la tolérance prédéfinie par rapport à la courbe ou respectivement aux valeurs discrètes de référence en mode prédictif grâce au modèle de régression de crête de sorte à générer une estimation d'arrêt d'utilisation de l'outil de coupe.

Dans un mode de réalisation particulier, l'outil de coupe est un foret de perceuse.

Il est aussi proposé un système sous forme de circuiterie électronique configurée pour effectuer une estimation de besoin de remplacement d'un outil de coupe et pour implémenter les étapes suivantes : collecter des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe ; comparer les données collectées, ou des données qui en sont dérivées, avec une courbe ou des valeurs discrètes de référence représentatives d'une usure nominale de l'outil de coupe au fil des opérations d'utilisation de l'outil de coupe ; vérifier si les données collectées, ou les données qui en sont dérivées, entraînent un dépassement, ou pas, d'une tolérance prédéfinie par rapport à la courbe ou respectivement aux valeurs discrètes de référence ; et en cas de dit dépassement, déduire un moment approprié pour effectuer un remplacement de l'outil de coupe, en fonction dudit dépassement.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un algorithme d'estimation de besoin de remplacement d'un outil de coupe ;
[Fig. 2] illustre schématiquement une courbe typique d'usure d'un outil de coupe au fil du temps ;
[Fig. 3] illustre schématiquement un premier mode de réalisation particulier d'estimation de besoin de remplacement de l'outil de coupe ;
[Fig. 4] illustre schématiquement un deuxième mode de réalisation particulier d'estimation de besoin de remplacement de l'outil de coupe ; et
[Fig. 5] illustre schématiquement un exemple de plateforme matérielle permettant d'implémenter les algorithmes présentés ci-avant.

### EXPOSE DETAILLE DE MODES DE REALISATION

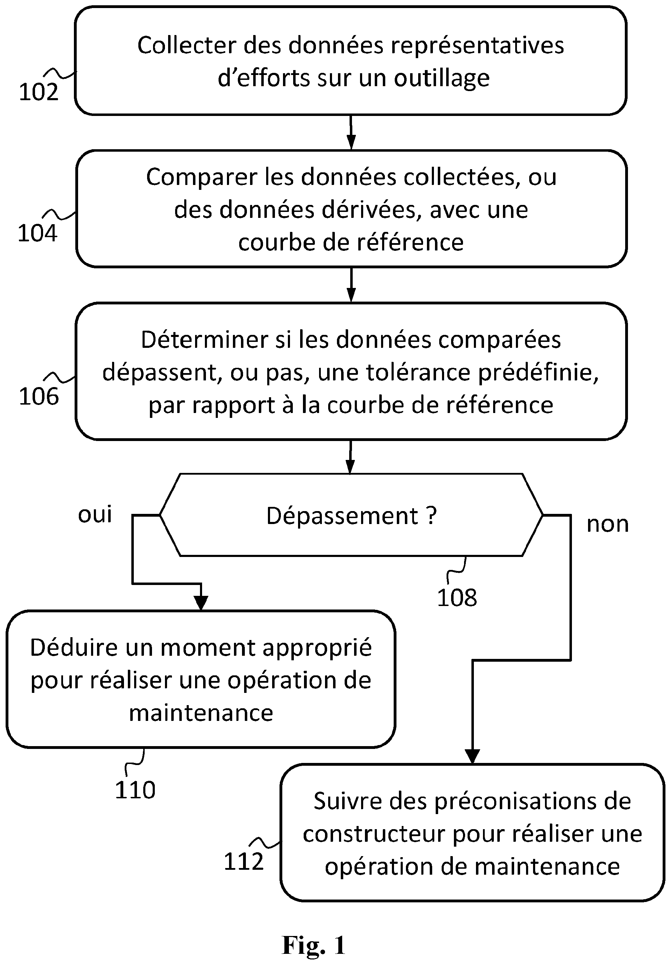

La **Fig. 1** illustre schématiquement un algorithme d'estimation de besoin de remplacement d'un outil de coupe.

L'outil de coupe est monté sur un outillage muni d'au moins un capteur adapté et configuré pour réaliser des mesures d'efforts subis par l'outil de coupe pendant des opérations d'utilisation de l'outil de coupe.

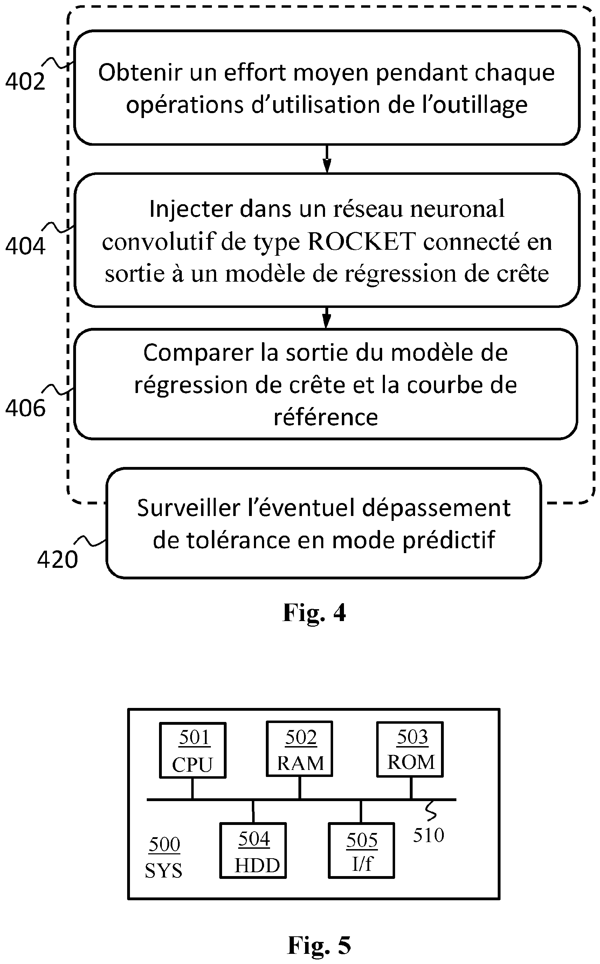

Des données représentatives de ces efforts subis par l'outil de coupe pendant des opérations d'utilisation de l'outil de coupe sont transmises à un système sous forme de circuiterie électronique, comme par exemple un système informatique pour que lesdites données soient analysées. Un agencement d'un tel système est présenté ci-après en relation avec la Fig. 5.

Dans un mode de réalisation particulier, l'outillage est une perceuse, telle que par exemple une unité de perçage électrique EDU (« Electrical Drilling Unit » en anglais) et l'outil de coupe est un foret de perceuse.

Dans un mode de réalisation particulier, le ou les capteurs sont des capteurs de force.

Dans un mode de réalisation particulier, le ou les capteurs sont des couplemètres.

L'algorithme d'estimation de besoin de remplacement de l'outil de coupe se déroule comme suit.

Dans une étape 102, le système collecte des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe. Le numéro d'opération d'utilisation de l'outil de coupe fournit donc une information d'âge (« aging » en anglais) de l'outil de coupe.

Dans une étape 104, le système compare les données collectées, ou des données qui en sont dérivées, avec une courbe de référence représentative d'une usure nominale de l'outillage au fil des opérations d'utilisation de l'outillage. Il est entendu qu'un emploi de valeurs discrètes de référence (au fil des opérations d'utilisation de l'outillage) est équivalent à un emploi d'une telle courbe de référence. Ainsi, l'utilisation par la suite des termes « courbe de référence » peut être interchangé avec les termes « valeurs discrètes de référence » sans départir du sens donné à la présente invention.

La courbe de référence peut être obtenue de manière empirique. La courbe de référence peut être obtenue par simulations.

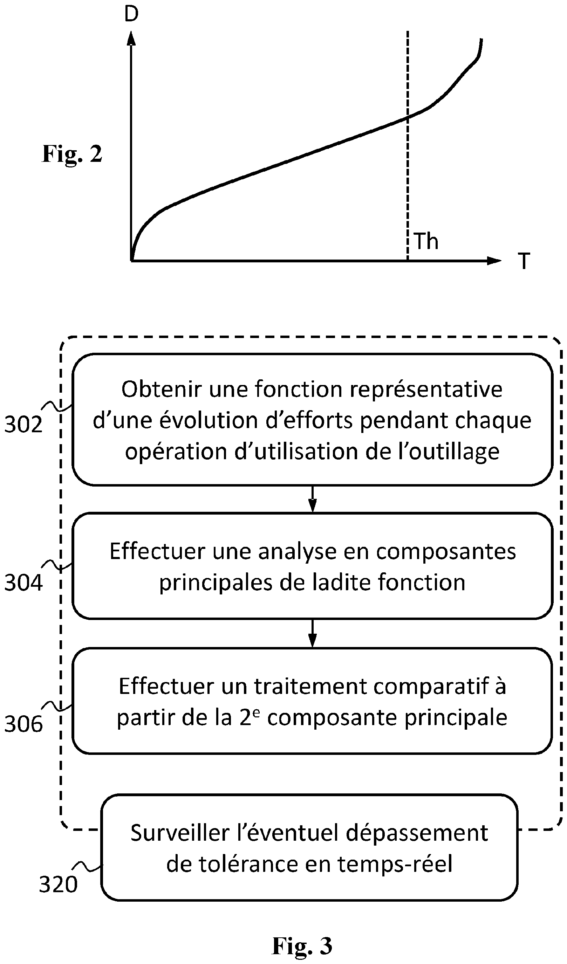

Dans un mode de réalisation particulier, la courbe de référence a une allure générale telle que schématiquement représentée sur la **Fig. 2****.** En abscisses est représenté le temps T, qui peut être retranscrit en nombre équivalent d'opérations d'utilisation de l'outillage. En ordonnées est représentée une donnée D, ou une donnée dérivée, représentative d'un effort subi pendant ladite opération d'utilisation de l'outil de coupe. Au-delà d'un seuil Th, des préconisations de constructeur recommandent de procéder à un remplacement de l'outil de coupe (usure théorique). L'allure générale de la courbe de référence schématiquement représentée sur la Fig. 2 est celle de "*Typical stages of tool wear in machining"* par Vaughn, en 1966.

Dans une étape 106, le système détermine si les données collectées ou les données qui en sont dérivées (c'est-à-dire les données comparées) entraînent un dépassement, ou pas, d'une tolérance prédéfinie par rapport à la courbe de référence. La tolérance peut être en plus (usure réelle plus rapide que l'usure théorique) ou en moins (usure réelle moins rapide que l'usure théorique).

Alors, dans une étape 108, le système vérifie si les données comparées entraînent un dépassement, ou pas, d'une tolérance prédéfinie par rapport à la courbe de référence. Si tel est le cas, une étape 110 est effectuée ; sinon, une étape 112 est effectuée. Le dépassement de la tolérance peut être un simple franchissement de la tolérance, ou une série de franchissements de la tolérance.

Dans l'étape 110, le système déduit un moment approprié pour effectuer un remplacement de l'outil de coupe, en fonction dudit dépassement. Par exemple, en temps réel, le système alerte qu'il faut suspendre les opérations d'utilisation de cet outil de coupe et le remplacer. Un mode de réalisation particulier est détaillé ci-après en relation avec la Fig. 3. Selon un autre exemple, en mode prédictif, le système prévoit à quel moment futur il est souhaitable de procéder au remplacement de l'outil de coupe. Un mode de réalisation particulier est détaillé ci-après en relation avec la Fig. 4.

Dans l'étape 112, le système recommande de suivre les préconisations de constructeur concernant le moment approprié pour réaliser le remplacement de l'outil de coupe (c'est-à-dire à partir du seuil Th sur la Fig. 2).

La **Fig. 3** illustre schématiquement un premier mode de réalisation particulier d'estimation de besoin de remplacement de l'outil de coupe.

Ce premier mode de réalisation particulier repose sur une analyse en composantes principales PCA (« Principal Components Analysis » en anglais). C'est une méthode statistique pour réduire la dimensionnalité d'un ensemble de données en transformant linéairement les données d'entrée en un nouveau système de coordonnées où la partie la plus significative de la variation des données peut être exprimée avec moins de dimensions. L'analyse en composantes principales PCA est donc un processus de calcul des composantes principales d'un jeu de données et d'utilisation desdites composantes principales pour effectuer un changement de base. La première composante principale d'un ensemble de N variables originales est une variable dérivée qui est une combinaison linéaire des N variables originales et qui expose le plus de variance. La deuxième composante principale est une variable dérivée qui est une combinaison linéaire des N variables d'origine et qui expose le plus de variance dans ce qui reste une fois l'effet de la première composante principale supprimé. Et ainsi de suite, au besoin.

Ici, comme détaillé ci-après, l'analyse en composantes principales PCA est appliquée sur une fonction. On parle d'analyse fonctionnelle en composantes principales fPCA

### « Functional Principal Components Analysis » en anglais).

Dans une étape 302, le système obtient une fonction représentative d'une évolution d'efforts pendant chaque opération d'utilisation de l'outil de coupe.

Dans un mode de réalisation particulier, la fonction en question est une fonction de mesures de couple au fil de ladite opération d'utilisation de l'outil de coupe.

Dans une étape 304, le système effectue une analyse en composantes principales de ladite fonction au fil des opérations d'utilisation de l'outil de coupe, c'est-à-dire une analyse fonctionnelle en composantes principales fPCA.

Dans une étape 306, le système effectue un traitement comparatif à partir de la deuxième composante principale.

Dans l'étape 306, le système obtient la distribution de valeurs de la deuxième composante principale. Le système détermine la courbe de référence comme étant la moyenne de la distribution, et le système applique une détection statistique de comportements atypiques en considérant une tolérance d'écart-type par rapport à la moyenne de la distribution, Par exemple, le système utilise une méthodologie de Mesure Statistique des Procédés MSP (ou SPC, pour « Statistical Process Control » en anglais). Par exemple, la tolérance est égale à +/- 3 fois l'écart-type de la distribution.

Dans une variante de l'étape 306, le système compare la deuxième composante principale avec la courbe de référence. La courbe de référence est obtenue en extrayant la deuxième composante lors d'une analyse en composantes principales de ladite fonction dans des cas d'usure nominale de l'outillage au fil des opérations d'utilisation de l'outillage.

Les étapes ci-dessus permettent notamment au système de surveiller, dans une étape 320, l'éventuel dépassement de tolérance en temps-réel. La deuxième composante principale peut ainsi être analysée après chaque opération d'utilisation de l'outil de coupe et le système peut ainsi générer une alerte d'arrêt d'utilisation de l'outil de coupe lorsque ledit dépassement est constaté après ladite opération d'utilisation de l'outil de coupe.

La **Fig. 4** illustre schématiquement un deuxième mode de réalisation particulier d'estimation de besoin de remplacement de l'outil de coupe.

Ce deuxième mode de réalisation particulier repose sur une utilisation d'un réseau neuronal convolutif de type ROCKET (« RandOm Convolutional KErnel Transform » en anglais) connecté en sortie à un modèle de régression de crête (« Ridge Regression Model ») en anglais). Le réseau neuronal convolutif de type ROCKET est un réseau neuronal adapté pour extraire des schémas (« patterns » en anglais) plus complexes que des neurones individuels. Il est aussi plus rapide à mettre en place qu'un réseau neuronal standard du fait qu'il ne requiert pas d'entraînement. Le modèle de régression de crête opère efficacement avec une quantité moindre de données que les modèles de régression habituellement utilisés dans les réseaux de neurones profonds.

Dans une étape 402, le système obtient une fonction représentative d'une évolution d'efforts pendant chaque opération d'utilisation de l'outil de coupe.

Dans un mode de réalisation particulier, la fonction en question est une fonction de mesures de couple au fil de ladite opération d'utilisation de l'outil de coupe.

Dans une étape 404, le système injecte la fonction obtenue à l'étape 402 dans le réseau neuronal convolutif de type ROCKET connecté en sortie au modèle de régression de crête.

Dans une étape 406, le système compare la sortie du modèle de régression de crête à la courbe de référence. La courbe de référence est obtenue en injectant des données correspondant à une normalisation de la fonction en question dans le réseau neuronal convolutif de type ROCKET connecté en sortie au modèle de régression de crête.

Les étapes ci-dessus permettent au système de surveiller, dans une étape 420, l'éventuel dépassement de tolérance en mode prédictif. La sortie du modèle de régression de crête peut ainsi être analysée comme un effort moyen subi par l'outil de coupe après un certain nombre d'opérations d'utilisation de l'outil de coupe afin d'obtenir une prédiction d'effort moyen dans des opérations ultérieures d'utilisation de l'outil de coupe, et le système peut ainsi notamment anticiper un arrêt d'utilisation de l'outil de coupe lorsqu'il y a une divergence supérieure à ladite tolérance entre la prédiction et la courbe de référence.

La **Fig. 5** illustre schématiquement un exemple de plateforme matérielle d'un système SYS 500, sous forme de circuiterie électronique, permettant d'implémenter les étapes et algorithmes présentés ci-avant.

La plateforme matérielle comporte alors, reliés par un bus de communication 510 : un processeur ou CPU (« Central Processing Unit » en anglais) 501 ; une mémoire vive RAM (« Random Access Memory » en anglais) 502 ; une mémoire morte 503, par exemple de type ROM (« Read Only Memory » en anglais) ou EEPROM (« Electrically-Erasable Programmable ROM » en anglais) ou de type Flash ; une unité de stockage, telle qu'un disque dur HDD (« Hard Disk Drive » en anglais) 504, ou un lecteur de support de stockage, tel qu'un lecteur de cartes SD (« Secure Digital » en anglais) ; et un gestionnaire d'interfaces I/f 505.

Le gestionnaire d'interfaces I/f 505 permet à la plateforme matérielle d'interagir avec des périphériques, tels que des périphériques d'interface homme machine (saisie, affichage de résultats de simulation...) et/ou avec un réseau de communication et/ou d'autres équipements, tels que des capteurs.

Le processeur 501 est capable d'exécuter des instructions chargées dans la mémoire vive 502 à partir de la mémoire morte 503, d'une mémoire externe, d'un support de stockage (tel qu'une carte SD), ou d'un réseau de communication. Lorsque la plateforme matérielle est mise sous tension, le processeur 501 est capable de lire de la mémoire vive 502 des instructions et de les exécuter. Ces instructions forment un programme d'ordinateur causant l'implémentation, par le processeur 501, de tout ou partie des étapes et algorithmes décrits ici.

Tout ou partie des étapes et algorithmes décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié. D'une manière générale, le système 500 comporte de la circuiterie électronique adaptée et configurée pour implémenter les étapes et algorithmes décrits ici.

## Revendications

1. Procédé d'estimation de besoin de remplacement d'un outil de coupe, le procédé étant implémenté par un système (500) sous forme de circuiterie électronique, le procédé comportant les étapes suivantes :
- collecter (102) des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe ;
- comparer (104) les données collectées, ou des données qui en sont dérivées, avec une courbe ou des valeurs discrètes de référence représentatives d'une usure nominale de l'outil de coupe au fil des opérations d'utilisation de l'outil de coupe ;
- vérifier (108) si les données collectées, ou les données qui en sont dérivées, entraînent un dépassement, ou pas, d'une tolérance prédéfinie par rapport à la courbe ou respectivement aux valeurs discrètes de référence ; et
- en cas de dit dépassement, déduire (110) un moment approprié pour un remplacement de l'outil de coupe, en fonction dudit dépassement.

2. Procédé selon la revendication 1, dans lequel ladite au moins une mesure d'effort pendant ladite opération d'utilisation de l'outil de coupe inclut une mesure de couple.

3. Procédé selon la revendication 2, dans lequel ladite au moins une mesure d'effort pendant ladite opération d'utilisation de l'outil de coupe inclut une fonction de mesures de couple au fil de ladite opération d'utilisation de l'outil de coupe.

4. Procédé selon la revendication 3, comprenant les étapes suivantes :
- effectuer (304) une analyse en composantes principales de ladite fonction au fil des opérations d'utilisation de l'outil de coupe ;
- obtenir la distribution de valeurs de la deuxième composante principale, et appliquer une détection statistique de comportements atypiques en considérant une tolérance d'écart-type par rapport à la moyenne de la distribution.

5. Procédé selon la revendication 3, comprenant les étapes suivantes :
- effectuer (304) une analyse en composantes principales de ladite fonction au fil des opérations d'utilisation de l'outil de coupe ;
- comparer la deuxième composante principale à la courbe ou respectivement aux valeurs discrètes de référence.

6. Procédé selon la revendication 4 ou 5, comprenant l'étape suivante :
- surveiller (320) le dépassement, ou pas, de la tolérance prédéfinie par rapport à la courbe ou aux valeurs discrètes de référence en temps réel, à savoir au fur et à mesure des d'opérations d'utilisation de l'outil de coupe, et générer une alerte d'arrêt d'utilisation de l'outil de coupe lorsque ledit dépassement est constaté après une opération d'utilisation de l'outil de coupe.

7. Procédé selon la revendication 3, comprenant les étapes suivantes :
- injecter (404) les données collectées dans un réseau neuronal convolutif de type ROCKET connecté en sortie à un modèle de régression de crête ;
- comparer (406) la sortie du modèle de régression de crête à la courbe ou respectivement aux valeurs discrètes de référence.

8. Procédé selon la revendication 7, comprenant l'étape suivante :
- surveiller (420) le dépassement, ou pas, de la tolérance prédéfinie par rapport à la courbe ou aux valeurs discrètes de référence en mode prédictif grâce au modèle de régression de crête de sorte à générer une estimation d'arrêt d'utilisation de l'outil de coupe.

9. Procédé selon l'une quelconque des revendications 1 à 8, dans lequel l'outil de coupe est un foret de perceuse.

10. Système (500) sous forme de circuiterie électronique configurée pour effectuer une estimation de besoin de remplacement d'un outil de coupe et pour implémenter les étapes suivantes :
- collecter (102) des données représentatives d'efforts subis par l'outil de coupe au cours d'opérations d'utilisation de l'outil de coupe, chaque donnée associant un numéro d'opération d'utilisation de l'outil de coupe et au moins une mesure d'effort pendant ladite opération d'utilisation de l'outil de coupe ;
- comparer (104) les données collectées, ou des données qui en sont dérivées, avec une courbe ou des valeurs discrètes de référence représentative d'une usure nominale de l'outil de coupe au fil des opérations d'utilisation de l'outil de coupe ;
- vérifier (108) si les données collectées, ou les données qui en sont dérivées, entraînent un dépassement, ou pas, d'une tolérance prédéfinie par rapport à la courbe ou respectivement aux valeurs discrètes de référence ; et
- en cas de dit dépassement, déduire (110) un moment approprié pour effectuer un remplacement de l'outil de coupe, en fonction dudit dépassement.
